# EUROPEAN PATENT APPLICATION

(11) **EP 2 881 780 A1**
(43) Date of publication of application: **10.06.2015**
(21) Application number: 13005623.7
(22) Date of filing: 03.12.2013
(51) Int. Cl.: G02F 1/03, G02F 1/355

(54) **Second-order optical nonlinear material**

(71) Applicant: Karlsruher Institut für Technologie, 76131 Karlsruhe (DE)
(72) Inventor: Alloatti, Luca, 71229 Leonberg (DE); Frölich, Andreas, 76133 Karlsruhe (DE); Koos, Christian, 74936 Siegelsbach (DE); Koeber, Sebastian, 72799 Leichlingen (DE); Wegener, Martin, 76227 Karlsruhe (DE)
(74) Representative: Müller-Boré & Partner Patentanwälte PartG mbB

(57) **Abstract**

Second-order optical nonlinear material arranged on a substrate (10; 21, 22, 23; 50, 51), wherein the second-order optical nonlinear material (14; 24; 45; 52) comprises at least two different materials (A; B; C) arranged in layers on the substrate (10; 21, 22, 23; 50, 51). The layers are arranged on each other in a predetermined order based on the type of material and/or orientation of the layer. The predetermined order is chosen so that the layers of the at least two different materials possess no macroscopic centrosymmetry with respect to their material and/or orientation.

## Description

The invention relates to a second order optical nonlinear material and to a method of depositing a second order optical nonlinear material.

This invention lies in the technical field of nonlinear optics, telecommunications, and light generation. In particular, this invention can be used in the field of integrated optics and in silicon phototonics.

Poled amorphous polymers, non centrosymmetric crystals, or strained silicon have been used so far as second order nonlinear materials. Second order optical nonlinearities in heterostructures with non-symmetric compositional grading grown by molecular beam epitaxy (MBE) are known; in particular non-central symmetric crystals grown by MBE are described by Ghahramani E. et al., Physical Review Letters, 64, 2815 (1990).

The use of nonlinear polymers, or more generally organic molecules, is a valid method of integrating second order nonlinear materials on a photonic circuit. Usually, these materials can withstand only low temperatures, and only for a short time, such as 100°C or 200°C, and are therefore not compatible with several applications such as creating a modulator on top of or in the vicinity of an electrical integrated circuit which may operate for prolonged times at high temperatures, such as 150°C, and require to withstand temperatures up to 400°C or higher during fabrication or packaging. Furthermore, organic molecules suffer from ageing and decreasing of nonlinearity under common conditions such as in the presence of the oxygen in the normal atmosphere.

The use of non-centrosymmetric crystals typically requires structuring the optical circuit onto a wafer made of the nonlinear crystal itself, such as a GaAs or InP wafer. This excludes several other material platforms, in particular the use of silicon or silicon-on-insulator (SOI) wafers. Moreover, the use of wave guides which are entirely made of the nonlinear materials introduces problems related to the impossibility of concentrating the optical field in the optical nonlinear region, and typically leads to diminishing the device performance, such as by decreasing nonlinear conversion efficiencies.

The use of strained silicon has the disadvantage that straining is not a standard CMOS (Complementary Metal Oxide Semiconductor) process, works best for certain waveguide dimensions only, and in general presents small nonlinearities.

Layers grown by MBE and exploiting transitions between quantum-wells subbands are expensive, have a small yield, and typically cannot be deposited on devices obtained by standard technologies such as silicon photonic waveguides.

It is a problem to provide an improved second order optical nonlinear material, in particular a material that has a higher heat and chemical resistance, which can be obtained by standard CMOS processes and/or reduces the production costs.

This problem is solved by the subject matter of the independent claims. Preferred embodiments are defined in the dependent claims.

One aspect relates to a second order optical nonlinear crystalline material arranged on a substrate, wherein the second order optical nonlinear material comprises at least two different materials arranged in layers on the substrate. The layers are arranged on each other in a predetermined order based on the type of material and/or orientation of the layer. The predetermined order is chosen so that the layers of the at least two different materials possess no macroscopic centrosymmetry with respect to their material and/or orientation.

The optical properties of a crystal depend on their crystalline structure. Crystals with a centrosymmetrical structure cannot possess an optical nonlinearity of uneven order. Centrosymmetric crystals are either optical linear or possess a usually weak third, fifth, etc. nonlinearity. It is known that crystals without centrosymmetry, i.e. crystals that are not centrosymmetric, may possess an optical nonlinearity of the second order.

Layers of at least two different materials are arranged on the substrate, such as a silicon substrate or a CMOS circuit. The optical nonlinear material may consist only of the layers. The nonlinear material may comprise multiple layers of the same material, but will contain at least two layers of chemically different materials which consist in total of at least three different atomic species. A first of these layers may be deposited on the substrate, while the other layers may be deposited on top of each other. The layers of the material may be provided in amorphous, polycrystalline, and/or crystalline form.

The term centrosymmetry is well defined for crystals in an atomic, microscopic level. A crystal has centrosymmetry when there exists an inversion centre at (0, 0, 0) in a coordinate system so that for every atom at (x, y, z) there is an according atom at (-x, -y, -z) of the same atomic species.

The term centrosymmetry is expanded to a macroscopic level, in that the materials are not considered on an atomic level, but as a continuum. The layers of the nonlinear material comprise a 'macroscopic non-centrosymmetry', meaning that the nonlinear material is imagined as being a continuum but not consisting of atoms. If, upon reflection at any inversion centre within the stack of layers of the different materials, the continuum of a certain material and orientation is reflected onto a space occupied by a continuum of the same type of material and reflected orientation, there exists a macroscopic centrosymmetry. Macroscopic centrosymmetry is, thus, corresponds to a three-dimensional point symmetry with respect to a single point as inversion centre. Non-centrosymmetry is given when, upon reflection at any inversion centre, at least one of the materials differs from the material of the reflected, corresponding material. The material may differ by type and/or orientation. Even though the term macroscopic is used to describe materials as a continuum, the layers of material may have a thickness of only a single molecule.

The stack of layers itself possesses no macroscopic centrosymmetry. When determining whether or not the optical nonlinear material possesses such symmetry, the substrate is not taken into consideration, but only the multiple layers. At least the part of the optical nonlinear material that is determined to guide light shows no macroscopic centrosymmetry.

Even though the symmetry of the multiple layers is a macroscopic property of the optical nonlinear material, as opposed to, e.g., its microscopic crystalline structure, the materials comprising these non-symmetric layers may possess an optical nonlinearity of the second order. Being microscopically non-centrosymmetric is only a necessary requirement for the material to comprise second order nonlinearity, but is not a sufficient requirement. A material which is non-centrosymmetric in the macroscopic sense, will be necessarily non-centrosymmetric in the microscopic sense, but not vice versa.

The layers are made out of at least two different materials and are arranged on top of each other. The macroscopic non-centrosymmetry of the multiple layers may be achieved by arranging layers of at least two different materials which consist in total of at least three different atomic species in an unregular order. E.g, the two materials Al₂O₃ and TiO₂ may be used as at least two different materials. These two different materials consist of three different atomic species, namely Al, Ti and O. At least the three different atomic species are arranged in a non-centrosymmetric sequence, such as Al-Ti-O which is different from the reflected sequence O-Ti-Al. The layers may also consist of more than two different materials which provides even more possibilities to arrange them asymmetrically on top of each other. The asymmetry of the material may be caused by the single layers having a specific orientation caused during their growth/deposition. An orientation can for example be recognized by an oxide group of the material of a single layer always being arranged on the same side of the layer with respect to the substrate. The orientation of the layer may, thus, be caused by their molecular structure.

The non-centrosymmetric arrangement of the material may be accomplished by using at least three different atomic species arranged in a non-centrosymmetric sequence. The at least three atomic species are part of the at least two different materials.

By this arrangement of the multiple layers on a substrate, an optical second order nonlinearity can be provided by materials that may even be centrosymmetric in their conventional intrinsic form. Thus, by this arrangement, materials can be used as second order nonlinear materials that could previously not be used as such.

The predetermined order and/or orientation of the layers breaks the centrosymmetry of the at least two different materials on a macroscopic scale. Even though the centrosymmetry of the material is a microscopic property of the material, this property can be influenced by the macroscopic arrangement of the different layers.

In an embodiment, the second-order optical nonlinear material does not contain quantum wells which are responsible for the nonlinearity of the second-order optical nonlinear material. This means that the second-order optical nonlinear material is provided free off quantum wells that cause the optical nonlinearity of the material. Quantum wells are potential wells that allow only discrete energy values. The layers are arranged so that substantially no quantum wells occur. Quantum wells may occur, e.g., by using MBE (molecular beam epitaxy) to deposit certain materials. MBE is a very expensive and very complex method to deposit materials, which should not be used to grow the layers of the second-order optical nonlinear material. The stack of layers forming the second-order optical nonlinear material might contain some random quantum wells that are not invariant under translations in the plane of the layers and that do not have Bloch states in the direction parallel to the layers since they are not crystalline. When using MBE to deposit nonlinear material, quantum wells are the origin of the nonlinearity. Such quantum wells are not needed to cause the nonlinearity of the second-order optical nonlinear material of the embodiment. However, the second-order optical nonlinear material might contain 'random quantum wells' caused by irregularities. However, the nonlinearity of the second-order optical nonlinear material does not depend on these few (maybe or maybe not existing) random quantum wells since they are not exploited or causing the nonlinearity. The second-order optical nonlinear material does not contain quantum wells such as those typically obtained by MBE which are responsible for a nonlinearity of MBE material.

In an embodiment of the invention, the layers are deposited on the substrate as mono-layers. In particular, the layers may have a width of only a single molecule of the material of the layer. Since the growth of layers is not perfect, mono-layers may in average be between a fraction of one molecule up to three molecules thick. The layers may consist of mostly or partially closed mono-layers. The layers may be provided as thin films that are so thin, that the properties of the layer are at the transistion of a physically microscopic and macroscopic scale. This explains that even though the order and/or orientation of the multiple layers is a property of classical physics, this property influences the quantum effects and optical properties of the optical nonlinear material.

In an embodiment of the invention, the material comprises at least three different materials arranged in layers in a predetermined repeated order. For example, three different materials A, B and C may be arranged in the repeated order A, B, C, A, B, C, etc. The multilayer structure is not symmetric and, thus, provides one possible asymmetric arrangement of the layers. Therein, one or more of the at least three different materials may be deposited in substacks of multiple layers of the same material. In the example with the three materials A, B, and C, this would for example be an arrangement of three layers of material A, two layers of material B, and four layers of material C followed by some layers of material A and so on. In other words, in a direction from the substrate up, each layer of a first material of the at least three materials is always followed by a layer of the same different second material of the at least three different materials or by a layer of the same first material.

Using at least three different materials may provide an even stronger nonlinear effect than using only two different materials. Furthermore, by using at least three different materials, even more different material properties of the different materials may be used to influence the overall structural properties of the optical nonlinear material.

According to an embodiment, the different materials are deposited on the substrate in layers by atomic layer deposition (ALD), physical vapour deposition (PVD), chemical vapour deposition (CVD) and/or metal organic chemical vapour deposition (MOCVD). This allows integrating second-order nonlinear materials with standard CMOS processes on phototonic circuits which are made of materials, such as silicon, which do not have an intrinsic second order nonlinearity. The optical nonlinear material consists of a stack of layers deposited by at least one of said deposition methods. These standard CMOS processes are well known and allow depositing second order optical nonlinear material on any surface and on any geometry as a thin film and/or layer. The optical nonlinear material may, thus, only be a few nanometers thick, up to several micrometers thick or thicker, depending on the molecular composition of the material and the number of layers deposited. Said deposition methods are less expensive to implement than for example molecular beam epitaxy (MBE) which typically requires ultraclean surfaces.

Typical materials that can be processed by, e.g., ALD processes, are Al₂O₃, TiO₂, ZnO, HfO₂, MgO, La₂O₃, SiO₂, ZrO₂, Ta₂O₅, In₂O₃, SnO₂, ITO, Fe₂O₃, MnOₓ, Nb₂O₅, Er₂O₃, WOₓ, WN, Hf₃N₄, Zr₃N₄, AIN, TiN, NbNₓ, Ru, Pt, W, Cu, Ni, Fe, Co. Further materials that can be processed by ALD are listed in "Crystallinity of Inorganic Films Grown by Atomic Layer Deposition: Overview and General Trends" by V. Miikkulainen et al., J. Appl. Phys. 113, 021301 (2013).

In one embodiment, the layers of different materials comprise orientations originating from an order of use of precursors used to deposit the respective materials, and varying said orientations of the layers is causing and/or increasing the optical nonlinearity of the optical nonlinear material. In certain deposition processes, for example in the case of ALD, chemical species called precursors are inserted in a reaction chamber one after the other. The precursors can be selected from a list including but not limited to: hydrogen peroxide, water, trimethyaluminum, titanium-tetraisopropoxide, diethylzinc, tetrakis dimethyl amino hafnium, bis (ethylcyclopentadienyl) magnesium. Further precursors are listed in the article by V. Miikkulainen cited above.

In a typical ALD process, two or more precursors are introduced at consecutive and separated time intervals into a reaction chamber. Each precursor reacts with the surface of the object to be coated. If the precursors are chosen correctly, a closed or partially closed mono-layer of a certain material is formed. During the process of depositing the layers, single layers may be deposited with a certain orientation based on the order in which the precursors are inserted into the reaction chamber. This may cause an orientation of the molecules of the material, e.g. with respect to the chemical elements and the surface of the substrate and/or the preceding layer. By gaining such an orientation, the layers of the optical nonlinear material can be arranged in a sequence such that a centrosymmetry of the resulting layer stack is broken. The breaking of the centrosymmetry and, thus, the asymmetric symmetry in the cross-section of the optical nonlinear material may be based on the orientation of the layers alone, may be based on both the order of the different materials plus the orientation of the single layers, or may be based only on the arrangement order of the different materials.

In an embodiment, at least one of the at least two materials is centrosymmetric in one of its bulk crystalline forms. The optical nonlinear material may consist of layers wherein at least one of the layer materials is centrosymmetric and, thus, not second order nonlinear in its intrinsic form. However, by the macroscopic asymmetric arrangement of the layers, even no second-order nonlinear materials may be used as a second order nonlinear layer in the layer stack.

According to an embodiment, materials are arranged in layers that provide for an overall material property of the optical nonlinear material at least 15% higher than said material property of one of the at least two materials in its bulk crystalline form. Such a material property may be temperature resistance, flexibility, electrical conductivity, and/or stability of the optical nonlinear material. For example, some materials in the stack of layers of the optical nonlinear material may have a low temperature resistance. When combined in the stack of layers of other materials having a higher temperature resistance, the overall temperature resistance of the whole stack may increase for more than 100°K compared to the temperature resistance of the material with the low temperature resistance alone. Preferably, the material property of the stack may be at least 20%, more preferably at least 30%, even more preferably at least 50% higher than the same material property of one of the at least two materials. This allows a combination of non-centrosymmetric materials that shows a second order optical nonlinearity but possesses weak/improper material properties with centrosymmetric materials possessing advantageous material properties.

According to an embodiment, the nonlinear material comprises layers of inorganic materials. The layers may contain oxides and/or metals.

According to an embodiment, the nonlinear material is deposited on the substrate in substacks of multiple layers, wherein each substack comprises from 6 to 30 layers of the same material, preferably from 8 to 15 layers, more preferably 12 layers. Adjacent substacks comprise different materials. All substacks may comprise the same number of layers. Substacks of the same material may be provided with the same number of layers. The substacks of the different materials may be provided on the substrate in a repeated order of the materials.

According to an embodiment, the nonlinear material is provided as a stack of layers comprising from 500 to 1500 layers, preferably from 800 to 1000 layers.

In an embodiment, the second order optical nonlinear material may be part of a CMOS structure. Since the second order optical nonlinear material may consist of a stack of amorphous, polycrystalline, and/or crystalline layers, the second order nonlinear material itself is highly resistant to heat and thus, may be used in electrical integrated processors that generate prolonged temperatures of up to 150°C, and require in the fabrication or packaging process to withstand temperatures up to 400°C or higher.

One aspect relates to the use of the second-order optical nonlinear material in a CMOS.

According to an embodiment, the second order optical nonlinear material may be used in an electro-optic modulator. The modulator can make use of the second order nonlinearity of the material, to modulate light propagating in the stack of layers as optical nonlinear material by applying electrical fields on the stack of layers.

One aspect relates to the use of the second-order optical nonlinear material in a electro-optic modulator.

According to an embodiment, a second harmonic generation material comprises the second order optical nonlinear material. The use of the SHG material forms another application of the optical nonlinear material.

One aspect relates to the use of the second-order optical nonlinear material as SHG material.

According to an embodiment, the optical nonlinear material may be implemented as core of a waveguide. The wave guide may be implemented as slab-wave guide.

One aspect relates to the use of the second-order optical nonlinear material as core of a waveguide.

According to an aspect, a method of depositing a second order optical nonlinear material on a substrate comprises the steps:
- depositing layers of at least two different materials on the substrate and
- arranging the layers on each other in a predetermined order based on the type of material and/or orientation of each layer, so the layers of the at least two different materials possess no macroscopic centrosymmetry with respect to their material and/or orientation.

By this specific deposition of a stack of layers without macroscopic centrosymmetry, a second order optical nonlinear material may be deposited.

The method may be used to provide a second order optical nonlinear material according to the first aspect of the invention.

In an embodiment, the depositing of layers on the substrate is done by atomic layer deposition, physical vapour deposition, chemical vapour deposition and/or metal organic chemical vapour deposition.

A stack of layers is deposited in which two or more chemical species as different materials are alternated in a particular pre-determined order, such that the resulting stack of layers has no macroscopic centrosymmetry. The centrosymmetry would, if present, forbid any second order nonlinearity. The resulting stack of layers comprises a non-zero second-order nonlinearity. The non-centrosymmetry of the optical nonlinear material may be obtained in two possible ways:
1. One (or more) of the materials deposited has, in one of its bulk crystalline forms, a nonlinearity of the second order. In this case, the other materials may be given a preferential growing direction to this or these nonlinear material(s), such that the resulting stack has a second order nonlinearity.
2. The stack of layers may contain only material that, when found in all of their bulk crystalline forms, does not have a nonlinearity of the second order. These materials may all be centrosymmetric in their corresponding bulk crystalline form. However, in this case, the optical nonlinear behaviour arises from the non-centrosymmetry of the stack of layers composed by the different materials together.

Such an optical nonlinear material has the following advantages when compared with organic nonlinear materials such as polymer-dispersed chromophores: The optical nonlinear material may stand higher temperatures, does not not require poling, may be hard and mechanically stable, may be chemically inert to several gases such as normal atmosphere, can be deposited inside a CMOS fabrication process rather than in a post-processing step, and may possibly be etched for forming optical wave guides. Furthermore, the stack of layers may have a higher optical damage threshold than organic materials.

When compared with bulk nonlinear materials such as InP or GaAs, the optical nonlinear material is less expensive to deposit, can be deposited on virtually any surface and does not require the use of a wafer made of a second order nonlinear material. The optical nonlinear material allows creating optical waveguides of different materials than the substrate material itself, which can be either linear or nonlinear, allowing for higher nonlinear optical efficiencies because of optimized overlap between optical fields and nonlinear regions. Furthermore, the optical nonlinear material is compatible with silicon photonic technology.

When compared with strained silicon, the second order optical nonlinear material may offer higher nonlinearities, may be deposited in a standard process in CMOS silicon photonics fabrication steps, and does not require waveguides having specific dimensions. Furthermore, the nonlinearity of the material is not concentrated in a small region such as the region where the stress is localized, but is present uniformly inside the entire stack of layers, which can be as thick as several micrometers or even millimeters of centimeters.

The introduction of an optical nonlinearity by breaking this symmetry of the stack of layers allows choosing materials for the layers that are, by themselves, optically linear. For some applications or devices, this allows combining an optical nonlinearity and some other desirable property of the deposited materials. In the case of difference frequency generation (DFG) for example, the second order optical nonlinear material allows a simultaneous presence of optical nonlinearity generated by the stack of layers and a use of infrared-transparent materials such as aluminium oxide with good heat conductivity. Many applications exist in which second order nonlinearities of the material are required, but the use of existing bulk second-order nonlinear materials is improper due to chemical, thermal, and/or optical properties. In these applications, a stack of layers of a mixture of materials may be used that shows sufficient second order nonlinear behaviour. Furthermore, the arrangement of the individual layers of materials allows defining the direction in which the centrosymmetry of the stack of layers is broken. This is an advantage over nonlinear materials in which the direction of broken symmetry is defined by the crystal axis and whose direction usually cannot be chosen independently of the substrate.

According to an aspect, a second-order optical nonlinear material is arranged on a substrate, wherein the second-order optical nonlinear material comprises at least two different materials arranged in layers on the substrate. The layers are arranged on each other in a predetermined order based on the type of material and/or orientation of the layer. In any plane given by a cross section through the substrate and the layers, the layers possess no point symmetry with respect to their material and/or orientation. Therein, the predetermined order and/or orientation of the layers may break a centrosymmetry of the at least two different materials on a macroscopic level.

The invention is further described by embodiments shown in the figures. In particular, it is shown by
- Figure 1: a cross-section through an optical nonlinear material comprising layers of three different materials on a substrate,
- Figure 2: a silicon hybrid electro-optic modulator with an optical nonlinear material comprising layers of three different materials in a waveguide slot in cross-section together with a diagram of the resulting optical mode main electric field component,
- Figure 3: SEM pictures of an asymmetric strip-load waveguide with and without an optical nonlinear material comprising layers of different materials,
- Figure 4: a cross-section of an electro-optic modulator consisting of multiple waveguiding sections partially surrounded by an optical nonlinear material comprising layers of different materials, and
- Figure 5: a cross-section of a slab waveguide with a waveguiding core with an optical nonlinear material comprising layers of different materials between a low-index cladding.

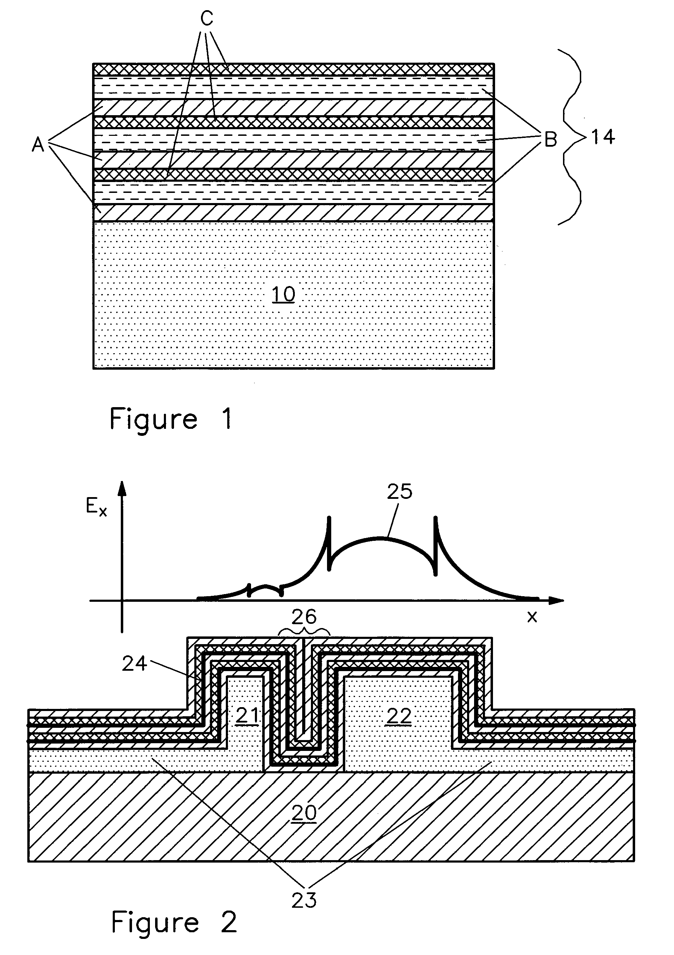

Fig.1 shows a cross-section of an optical nonlinear material 14 consisting of a stack of layers on a substrate 10. The optical nonlinear material 14 comprises layers of three different materials A, B, and C. The materials A, B, and C are deposited on the substrate 10 in the following order: On the substrate 10 itself, three layers of material A are deposited, followed by four layers of material B, on which two layers of material C are deposited. The same sequence of materials is repeated three times. In total, the optical nonlinear material 14 consists of nine layers of material A (deposited in three substacks, three layers a piece), twelve layers of material B (deposited in three substacks, four layers a piece), and six layers of material B (deposited in three substacks, two layers a piece).

The layers of different materials A, B, and C are deposited on the substrate 10 so that they are macroscopically arranged asymmetrically. In particular, the stack of layers that forms the second-order optical non linear material 14 possesses no point symmetry in the cross section shown by Fig. 1, which is a cross section through the layers and the substrate 10 in a plane perpendicular to the substrate 10. Thus, the stack of layers itself and not only its cross section possesses no macroscopic centrosymmetry, meaning that there exists no inversion centre at (0, 0, 0) in a coordinate system so that for every point (x, y, z) within a defined space within the stack of layers there is an indistinguishable point (-x, -y, -z) in that the layers are arranged in the same material and/or in that the layers are arranged in the accordingly reflected orientation. The defined space within the stack of layers that is not centrosymmetric incorporates multiple layers of at least two different materials, preferably at least three different materials. In particular, the stack of layers of the optical nonlinear material 14 comprises no inversion centre in or around a plane arranged in substantially the middle of the stack of layers and substantially parallel to the surface of the substrate used to deposit the layers.

In the embodiment shown by Fig. 1, the number of layers and the number of different materials are chosen exemplarily. In other embodiments, each material A, B, and C could be deposited in substacks of more or fewer layers, also more different materials could be used, as long as the resulting stack of layers is not centrosymmetric. All the materials A, B, and C are different from each other, meaning that they are provided in a different chemical composition.

The layers of different materials A, B, and C can be deposited by atomic layer deposition (ALD) or by any other deposition technique such as PVD, VCD, and/or MOCVD. In the case of ALD, precursors are chosen for each layer and inserted into a reaction chamber one after the other. Each precursor interacts with the surface of the object to be coated, e.g. the first precursor introduced interacts with the surface of the substrate 10. Two or more precursors may be used to grow the chosen material. Some different materials may partially need the same precursors. Thus, a given precursor might be used for obtaining more than one material, such as water for introducing oxygen in the formation of, e.g. ZnO and Al₂O₃.

The materials A, B, and C used in the stack of layers may be known to form crystals that are centrosymmetric or non-centrosymmetric. An example for a non-centrosymmetric material that can be deposited by ALD is the hexagonal wurtzite crystalline form of ZnO.

If one of the deposited materials forms non-centrosymmetric crystals, or polycrystalline films, the deposition of the single stacks allows giving a long-range order to the crystalline direction of the domains forming the polycrystalline film of the stack of layers. This is because of the presence of adjacent material(s) which define a preferential crystal orientation and/or growth.

As an example, a precursor sequence such as, P1A, P2A, P2B, P1 B, will denote an ALD process wherein the precursor P1A is introduced first in the reaction chamber, followed by the precursor P2A, followed by the precursor P2B, followed by the precursor P1B. Therein, the precursors P1A and P2A are used to deposit material A, and the precursors P1 B and P2B are used to deposit material B.

In many ALD processes, the order of introducing the two or more precursors in the reaction chamber needed to deposit a given material can be chosen at will. E.g., material B can be deposited by ALD by introduction of the precursors P1B and P2B in the order P1 B, P2B or in the order P2B, P1 B. While both precursor sequences will deposit the same material B, the orientation of the molecules in the layers may be different, depending on the exact precursor sequence. E.g., in many layers deposited by ALD, an oxide may be detected at a certain side of the layer. This characteristic of the layer is called orientation of the layer.

A convenient way of creating a macroscopically non-centrosymmetric stack of layers consists, for example, of iterating a given precursor sequence, such as P1A, P2A, P1 B, P2B, P1 C, P2C an indefinite number of times until the desired film thickness is deposited. This precursor sequence will create single layers of the materials A, B, and C in this order, repeated over the desired width corresponding to the thickness of the stack of layers.

There are extremely many different possible precursor sequences which lead to a macroscopically non-centrosymmetric stack of layers, and these correspond to different permutations of the precursors that can possibly be used in the chosen deposition technique (ALD, PVD, CVD, MOCVD). In particular, different combinations of the precursors and different numbers of layers forming one film of a given material will form different permutations of all the possible precursors. One precursor sequence leading to a non-centrosymmetric stack is the sequence P1A, P2A, P1B, P2B, wherein with P2A = P2B two precursors are the same for the different materials A and B, iterated at least 10, at least 100, at least 1000 or even more times until the desired film and/or stack thickness is achieved.

In general, a mono-layer of material formed by the precursors that are introduced first in the chamber will lie deeper inside the stack than those formed by precursors that were introduced later. Moreover, in general, the probabilities of certain chemical reactions between two precursors will depend on the order in which they enter the reaction chamber, since the first precursor entering the chamber will have already reacted with the species present on the surface of deposition. As a consequence, the stack obtained in the example above will result in a macroscopically non-centrosymmetric stack since the iterated P1A, P2A, P1B, P2B with P2A=P2B sequence is different, even upon arbitrary translations, from the reflected stack.

Generally speaking, an macroscopically asymmetric stack of layers may be obtained by repeating N times the deposition of i atomic layers of a material A, j atomic layers of a material B, k atomic layers of a material C, wherein N, i, j and k are positive integers. The integers i, j, and k give the number of layers that the materials A, B, and C, respectively, are deposited on themselves. The stack is deposited on a substrate. Also, the last repetition does not need to be completed. In the embodiment shown in Fig. 1, the second-order optical nonlinear material 14 is obtained by repeating N=3 times the deposition of i=3 atomic layers of a material A, j=4 atomic layers of a material B, k=2 atomic layers of a material C.

A sufficient condition which breaks the centrosymmetry of the stack of layers obtained is that ABC is different from the sequence reflected with respect to a plane in the middle of the stack, which would be CBA. In another embodiment of the invention, there is no unit cell within the stack of layers that is repeated a certain number N times.

Such a stack of layers may be used as SHG (second harmonic generation) material. Experiments were carried out wherein ultra-short laser pulses were introduced into stack of layers of the three different materials Al₂O₃/TiO₂/ZnO and stack of the three different materials Al₂O₃/TiO₂/HfO₂.

In these experiments, a stack of layers was obtained by repeating N times the deposition of i atomic layers of Al₂O₃, j atomic layers of TiO₂ and k atomic layers of ZnO. The embodiment was e.g. compared with a stack obtained by repeating N times the deposition of i atomic layers of Al₂O₃, j atomic layers of TiO₂ and k atomic layers of HfO₂. In the exemplary experiments, it was set that i = j = k, and N was chosen to obtain a total sample thickness of 170 nm. Thus, the stack of layers comprises a thickness of 170 nm measured from the substrate. The samples were deposited by ALD at 250°C. As precursors of Al₂O₃, trimethyaluminum, hydrogen peroxide and water were used. For TiO₂, titanium-tetraisopropoxide and hydrogen peroxide were used. For ZnO, diethylzinc and hydrogen peroxide were used. For HfO₂, tetrakis dimethyl amino hafnium (TDMAHf) and hydrogen peroxide were used. The stack was deposited on a clean surface of a 0.22 mm microscope glass slide as substrate. After fabrication, the sample stack of layers was inserted in the focus of a femtosecond laser with center wavelength 800 nm (focal distance 25 mm, beam waist before focusing <5 mm).

A second-harmonic generation signal is observed in transmission of the sample stack of layers, the sample is mounted with 45 degrees with respect to the direction of the excitation. In all cases, if a SHG signal was measurable, it resulted to be more than 10 times stronger for p-polarization than for s-polarization and quadratic in the pump power. Additionally, the produced wavelength was controlled to be close to 400 nm by using a band-pass filter. These properties together show that the signal measured was due to the stack of layers providing SHG.

Reference samples of the materials alone (pure Al₂O₃ , TiO₂, ZnO and HfO₂) and an uncoated glass slide were measured as well. Results are given in table 1 below. ZnO crystals are known to be second-order nonlinear.

**Table 1**

| **Sample with thickness of 170 nm** | **SHG intensity (in a.u.)** |
|---|---|
| uncoated glass slide | <0.1 |
| pure Al₂O₃ | <0.1 |
| pure TiO₂ | <1 |
| pure ZnO | 1400 |
| pure HfO₂ | <1 |
| 5x Al₂O₃/5x TiO₂/5x ZnO | 8 |
| 50x Al₂O₃/50x TiO₂/50x ZnO | 400 |
| 1 x Al₂O₃/1x TiO₂/1x HfO₂ | <0.1 |
| 4x Al₂O₃/4x TiO₂/4x HfO₂ | 3 |
| 20x Al₂O₃/20_{X} TiO₂/20x HfO₂ | 16 |

Table 1 shows that the uncoated glass slide, Al₂O₃, TiO₂, and HfO₂ have negligible second-order nonlinearity when taken alone. ZnO has the strongest nonlinearity.

A comparison of the stack of layers 50x Al₂O₃/50x TiO₂/50x ZnO with i=j=k=50 with a comparison of the pure ZnO crystal shows the nonlinearity of the stack of layers: Under the assumption that the focus size of the laser pulse is smaller than a domain size of the polycrystalline ZnO film, and the hypothesis that the signal of the 50x Al₂O₃/50x TiO₂/50x ZnO sample was produced by the ZnO only, then one would have measured an SHG intensity 3² = 9 times larger with the pure ZnO sample, since the pure sample contains 3 times more ZnO. However, the signal measured was only 3.5 times larger, indicating that the presence of the interfaces (the materials Al₂O₃ and TiO₂) enhances the nonlinearity in the 50x Al₂O₃/50x TiO₂/50x ZnO sample.

Comparing the sample of pure HfO₂ with the sample 20x Al₂O₃/20x TiO₂/20x HfO₂ with i=j=k=20 also demonstrates an optical nonlinear behaviour of the sample 20x Al₂O₃/20x TiO₂/20x HfO₂. As pure materials, all the materials Al₂O₃, TiO₂, and HfO₂ show a negligible SHG intensity. However, the sample of 20x Al₂O₃/20x TiO₂/20x HfO₂ shows an SHG signal that is greatly improved when compared to any of the single materials.

As a definition, a material will be considered as a second-order optical nonlinear material if it shows a SHG behaviour of at least 5 a.u. under the conditions described above.

**Table 2**

| **Sample with a total of 900 layers** | **SHG intensity (in a.u.)** |
|---|---|
| 100x (3x Al₂O₃/3x TiO₂/3x HfO₂) | 1 |
| 50x (6x Al₂O₃/6x TiO₂/6x HfO₂) | 18 |
| 25x (12x Al₂O₃/12x TiO₂/12x HfO₂) | 33 |
| 15x (20x Al₂O₃/20x TiO₂/20x HfO₂) | 20 |
| 10x (30x Al₂O₃/30x TiO₂/30x HfO₂) | 11 |
| 5x (60x Al₂O₃/60x TiO₂/60x HfO₂) | 3 |
| 3x (100x Al₂O₃/100x TiO₂/100x HfO₂) | 1 |
| 2x (150x Al₂O₃/150x TiO₂/150x HfO₂) | 1 |

Table 2 shows experimental data in that a sample stack was provided as second-order optical nonlinear material by depositing layers of the three different materials Al₂O₃, TiO₂, and HfO₂ on top of each other. The layers of the sample stack were deposited by ALD. Each sample stack of layers was deposited to comprise a total number of 900 layers. The sample stacks differ from each other in that the three materials are deposited in a different number of substacks, respectively. Substacks are layers of the same material deposited on top of each other.

E.g., on the substrate of the first sample stack listed in table 2, a substack of three layers of Al₂O₃ is deposited, on top of which a substack of three layers of TiO₂ is deposited, followed by a substack of three layers of HfO₂. The three substacks are deposited on each other repeatedly 100 times in the exact same order of materials. Thus, the sample comprises 900 layers in total.

In table 2, the numbers of layers of each substack is increased from the top of table 2 to the bottom of table 2. On the substrate of the last sample stack listed in table 2, a substack of 150 layers of Al₂O₃ is deposited, on top of which a substack of 150 layers of TiO₂ is deposited, followed by a substack of 150 layers of HfO₂. The three substacks are deposited on each other two times, so that the sample comprises 900 layers in total, again.

All the tested sample materials comprise the same number of layers in each substack. This means that for the variables introduced in the description of figure 1, i=j=k.

The intensity of the raw recorded SHG signal was detected for each sample without noise subtraction. The sample stack had a different thickness than the samples examined in table 1 and, thus, differ in the intensity value. Table 2 shows that the sample stacks show the strongest second-order optical nonlinearity that comprise substacks of 6 to 30 layers, respectively. The strongest nonlinearity is achieved when the material is provided in substacks comprising 12 layers, respectively.

Fig. 2 shows in the lower half a cross section of a silicon hybrid electro-optic modulator 20 with an optical nonlinear material comprising layers of different materials in a waveguide slot.

The silicon hybrid electro-optic modulator 20 is provided as silicon strip-load waveguide comprising two rails 21 and 22 of different widths that are shown in Fig. 2 in cross section. Each of the two rails 21 and 22 is provided as silicon strip and is electrically connected to a respective silicon strip load 23. The two rails 21 and 22 are arranged so that a slot 26 is formed between them, e.g. a slot of about 400 nm in cross section. On the modulator 20, a stack of layers 24 is deposited by ALD and forms a second-order optical nonlinear material. The stack of layers 24 is in particular deposited so that it fills the slot 26 between the two rails 21 and 22. The stack of layers 24 grown by ALD adapts to the topography of the structure it is grown on.

The stack of layers 24 may be a stack of i = 5 layers of ZnO, j = 5 layers of TiO₂, and k = 5 layers of Al₂O₃ deposited on the asymmetric silicon strip-load waveguide 20. The deposition of the substacks of the three materials is iterated N times so as to obtain a total thickness of the stack 24 of 250 nm. The width of the smaller rail 21 is 150 nm, the width of the slot 26 is 400 nm in the x-direction, the width of the wider rail 22 is 400 nm. The stack of layers 24 uniformly deposited as ALD film adapts to the topography of the waveguide, therefore the film grows inside the slot 26 between the two rails 21 and 22 until the slot 26 is completely filled. Since the slot has a width of 400 nm and the stack is grown on both sides and the bottom of the slot 26, the stack will not reach the height of 250 nm on both sides of the slot 26, but it is grown until the slot 26 is filled.

Because the stack of layers 24 has a second-order nonlinearity, it will also exhibit the Pockels effect, thereby changing its refractive index on a femtosecond time scale, or shorter, linearly with an externally applied electric field. When a modulating electric field is present between the two silicon rails 21 and 22, the corresponding optical mode main electric field component 25 will experience a variation of the mode effective index and, therefore, a modulation, as is shown in the diagram in the upper part of Fig. 2.

The modulator 20 as described above was tested by applying a sinusoidal wave having an amplitude >2V. The length of the phase-shifting region was 1 mm, and a modulation of 0.05 rad was observed at both 1 GHz and 10 GHz under inspection of the modulation sidebands on an optical spectrum analyzer (OSA). A reference sample, being coated with an amorphous resist (instead of the stack of layers 24) shows a modulation five times smaller, whose origin is attributed to free-carrier effects in the silicon waveguide. The nonlinearity of the stack of layers 24 deposited as 5x Al₂O₃/5x TiO₂/5x ZnO is attributed to a long range order of the ZnO crystal domain orientation.

The optical mode main electric field component 25 is asymmetric inside the slot 26. The ALD film of the stack of layers 24 is insulating, so that when an external voltage is applied between the silicon rails 21 and 22, an electric field is present inside the slot 26. The stack of layers 24 provided as ALD material inside the slot 26 is grown in the opposite direction, until the slot is completely filled. As a consequence, the presence of the external voltage between the two rails 21 and 22 causes one half of the slot to increase its refractive index via the Pockels effect in second-order nonlinear materials and to decrease in the other half. Since the optical mode 25 is asymmetric, the mode experiences a variation in its effective index, and therefore experiences modulation.

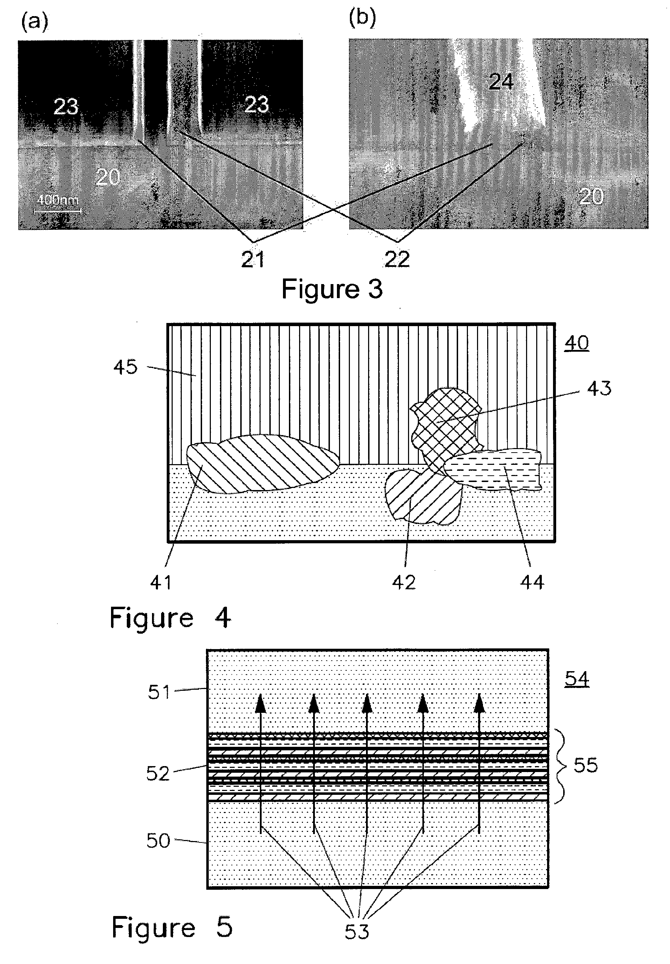

Fig. 3 shows SEM (scanning electron microscope) pictures of the asymmetric strip-load waveguide as modulator 20 schematically depicted in Fig. 2. In Fig. 3(a), a stack of layers 24 (see Fig. 2, not visible in Fig. 3a) is deposited on top of the modulator 20. In Fig. 3(b), no stack of layers but an amorphous resist is deposited on top of the modulator 20.

In another embodiment, the waveguide may comprise two symmetric rails of similar width, and the first order mode (asymmetric) may be used. In another embodiment, an arbitrary number of rails forms the waveguide, and the used optical mode may be a high-order mode.

The stack of layers as shown in Fig. 1 provides a second-order optical nonlinear material that can be applied to a variety of photonic devices, wherever the existence of second-order nonlinearity is required.

Fig. 4 shows a cross-section of an electro-optic modulator 40 consisting of multiple waveguiding sections partially surrounded by an optical nonlinear material comprising layers of different materials.

A second-order nonlinear material changes its refractive index linearly with an external electric field (Pockels effect) of a bandwidth of several THz. This effect can be exploited for building high-speed electro-optic modulators, where the phase of the optical field is modulated as a function of an external voltage. In its general form, an optical modulator consists of a waveguide, which can be a dielectric waveguide made for example of silicon, GaAs, InP, glass, and/or many other materials, or a plasmonic waveguide made of metal.

In the modulator 40 shown in Fig. 4, the waveguiding section consist of multiple separated parts/cores 41, 42, 43, and 44, of which some are arranged adjacent to each other (namely cores 42, 43 and 44) and some are arranged separately from each other (namely core 41 is arranged as separate single core). A stack of layers 45 as second-order optical nonlinear material provided as ALD material is in physical contact with the cores 41, 43, and 44 and not physical contact with the core 42. A variation of the refractive index of the stack of layers 45 (e.g. by applying an electric field) will lead to a variation of the effective index of the optical mode in the optical waveguide 40.

In other embodiments, a waveguide may consist of a photonic crystal, a sub-wavelength grating, or a resonator such as a ring resonator. In another embodiment of the invention, the waveguide consists of the ALD material itself, which is first deposited on a wafer; and later structured by lithography and etching.

Second-order optical nonlinear materials may allow any of the following processes:
- difference-frequency generation (DFG),
- sum-frequency generation (SFG),
- second-harmonic generation (SHG),
- parametric-down conversion,
- optical parametric amplification (OPA),
- optical parametric oscillator (OPO), and/or
- optical rectification (OR).

In general, phase-matching is required for achieving high process efficiencies. A properly dimensioned waveguide as very generally and exemplarily described in connection with Fig. 4 may serve to implement any of the applications listed above. The waveguide may consist of silicon or any other standard photonic material, may comprise one or more rails, or may be coated with a stack of layer having a second-order nonlinearity. The dimensioning of the waveguide may be such that phase-matching is achieved either by mode phase-matching (MPM), birefringence, or quasi-phase matching.

Fig. 5 shows a cross-section of a slab-waveguide 54. The slab-waveguide 54 comprises a waveguiding core 55 sandwiched between low-index cladding 50 and 51. The waveguiding core 55 is provided as a stack of layers 52 of different materials and, thus, as second order optical nonlinear material. The waveguiding core 55 is, thus, provided as nanolaminate core. Light is guided by the waveguiding core 55.

An external electric field 53 may be applied perpendicular to the direction in that the different layers are deposited. The external electric field 53 changes the refractive index of the stack of layers 52 according to the Pockels effect and is, thus, modulates the light guided in the waveguiding core 55.

The external electric field 53 is shown in Fig. 5 as being provided orthogonal to the growing direction of the nanolaminate. However, the electric field 53 may have any orientation with respect to the stack of layers 52 and may vary at any possible frequency, from DC to several THz. The modulated light can, therefore, be considered as a superposition of different new frequencies generated by a nonlinear mixing process.

Alternatively, the waveguiding core 55 may be exploited for optical rectification, such as in photodetectors. In this case, light inside the waveguiding core 55 generates the electric field 53 which may be measured by conventional techniques, e.g. electrodes and/or transistors. The low-index cladding 50 and 51 may consist of metal, forming a plasmonic slab-waveguide with light being confined in the waveguiding core 55.

### List of Reference Numerals

- A, B, C: material
- 10: substrate
- 14: optical nonlinear material; stack of layers
- 20: electro-optic modulator
- 21: smaller rail
- 22: wider rail
- 23: strip-load
- 24: stack of layers; optical nonlinear material
- 25: optical mode main electric field component
- 26: slot
- 40: modulator
- 41: core
- 42: core
- 43: core
- 44: core
- 45: stack of layers; optical nonlinear material
- 50: low-index cladding
- 51: low-index cladding
- 52: stack of layers; optical nonlinear material
- 53: electric field
- 54: slab-waveguide
- 55: waveguiding core

## Claims

1. Second-order optical nonlinear material arranged on a substrate (10; 21, 22, 23; 50, 51), wherein
- the second-order optical nonlinear material (14; 24; 45; 52) comprises at least two different materials (A; B; C) arranged in layers on the substrate (10; 21, 22, 23; 50, 51),
- the layers are arranged on each other in a predetermined order based on the type of material and/or orientation of the layer, and
- the predetermined order is chosen so that the layers of the at least two different materials (A; B; C) possess no macroscopic centrosymmetry with respect to their material and/or orientation.

2. Second-order optical nonlinear material according to claim 1, wherein the second-order optical nonlinear material (14; 24; 45; 52) does not contain quantum wells which are responsible for the nonlinearity of the second-order optical nonlinear material.

3. Second-order optical nonlinear material according to claim 1 or 2, wherein the layers are deposited on the substrate (10; 21, 22, 23; 50, 51) as mono-layers.

4. Second-order optical nonlinear material according to any of the preceding claims, wherein the material (14; 24; 45; 52) comprises at least three different materials (A; B; C) arranged in layers in a predetermined repeated order.

5. Second-order optical nonlinear material according to any of the preceding claims, wherein the different materials (A; B; C) are deposited on the substrate (10; 21, 22, 23; 50, 51) in layers by atomic-layer deposition, physical vapour deposition, chemical vapour deposition and/or metal organic chemical vapour deposition.

6. Second-order optical nonlinear material according to any of the preceding claims, wherein the layers of different materials (A; B; C) comprise an orientation originating from an order of use of precursors used to deposit the respective material (A; B; C), and wherein said orientation of the layers is causing and/or increasing the macroscopic point asymmetry of the optical nonlinear material (14; 24; 45; 52).

7. Second-order optical nonlinear material according to any of the preceding claims, wherein at least one of the at least two materials (A; B; C) is centrosymmetric in one of its bulk crystalline forms.

8. Second-order optical nonlinear material according to any of the preceding claims, wherein materials are arranged in layers that provide for an overall material property of the optical nonlinear material (14; 24; 45; 52) at least 15% higher than said material property of one of the at least two materials (A; B; C) in its bulk crystalline form.

9. Second-order optical nonlinear material according to any of the preceding claims, wherein the nonlinear material (14; 24; 45; 52) comprises layers of inorganic materials (A; B; C).

10. Second-order optical nonlinear material according to any of the preceding claims, wherein the nonlinear material (14; 24; 45; 52) is deposited on the substrate (10; 21, 22, 23; 50, 51) in substacks of multiple layers, wherein
- each substack comprises from 6 to 30 layers of the same material (A; B; C), and
- adjacent substacks comprise different materials.

11. CMOS comprising an optical nonlinear material according to any of the preceding claims.

12. Electro-optic modulator (20; 40) comprising an optical nonlinear material (24; 45) according to any of claims 1-10.

13. Second harmonic generation material comprising an optical nonlinear material according to any of claims 1-10 .

14. Waveguide (20; 40;54) comprising an optical nonlinear material according to any of claims 1-10 as core.

15. Method of depositing a second-order optical nonlinear material on a substrate (10; 21, 22, 23; 50, 51), comprising the steps
- depositing layers of at least two different materials (A; B; C) on the substrate (10; 21, 22, 23; 50, 51) and
- arranging the layers on each other in a predetermined order based on the type of material and/or orientation of each layer, so that the layers of the at least two different materials (A; B; C) possess no macroscopic centrosymmetry with respect to their material and/or orientation.
